# EUROPEAN PATENT SPECIFICATION

(11) **EP 4 350 164 B1**
(45) Date of publication and mention of the grant of the patent: **19.03.2025**
(21) Application number: 23201639.4
(22) Date of filing: 04.10.2023
(51) Int. Cl.: F16D 65/097

(54) **DISC BRAKE FOR RAILWAY VEHICLES**
SCHEIBENBREMSE FÜR SCHIENENFAHRZEUGE
FREIN À DISQUE POUR VÉHICULES FERROVIAIRES

(30) Priority: 06.10.2022 IT 202200020598
(43) Date of publication of application: 10.04.2024
(73) Proprietor: Cofren S.r.L., 83100 Avellino (IT); Poli S.r.l., 26010 Camisano (CR) (IT)
(72) Inventor: DE SOCCIO, Vittorio, 83100 AVELLINO (IT); BOFFELLI, Roberto, 26010 CAMISANO (CR) (IT)
(74) Representative: Studio Torta S.p.A.

(56) References cited:
- EP-A1- 4 006 373
- JP-A- 2020 079 642

## Description

### CROSS-REFERENCE TO RELATED APPLICATIONS

This patent application claims priority from Italian patent application no. 102022000020598 filed on October 6, 2022

### TECHNICAL FIELD

The present invention relates to a disc brake for railway vehicles. In particular, the present invention is advantageously, but not exclusively, applied to medium/low speed railway vehicles.

Here and in the following, medium/low speed trains mean trains whose maximum speed is equal to 220 Km/h.

### STATE OF THE PRIOR ART

As is known, disc brakes are subject to high stresses and in order to obtain an optimum brake action it is necessary to have a good transmission of the braking force from the pad to the disc.

For a long time now, the orientation has been to use pads comprising a plurality of friction elements having reduced dimensions, instead of only one friction element having greater dimensions. One of the solutions adopted to this regard provides for each pad to be substantially constituted by a main base plate and by a plurality of friction elements fixed to the base plate. Generally, each of the friction elements is composed of a sheet and of a friction insert fixed in an irreversible manner to the sheet.

The solution relative to the use of a plurality of friction elements having reduced dimensions is advantageous both in terms of effectiveness of the pressure on the disc and, thus, of braking, and in terms of low noise.

To such regard, it should be highlighted that the low noise has increasingly become an important discriminating factor for choosing the disc brakes to use. This is particularly true for the medium/low speed trains programmed for making a high number of stops, such as for example undergrounds, regional or intercity trains.

One of the problems that the use of the pads having a plurality of friction elements has had to deal with has concerned the formation of circular depressions on the disc of the brake. The presence of such circular depressions necessarily results in a damage of the friction elements of the pad.

This problem has been solved by increasing the friction surface of at least part of the friction elements. In particular, the friction elements are arranged in arched rows which, in use, are superimposed on respective concentric lines of the disc on which the pad acts and, substantially, the friction elements of the outermost rows have greater dimensions than the friction elements of the innermost rows. Furthermore, in order for this solution to be effective, the friction elements of each row have to act on a portion of surface of the disc which is partially superimposed on the portions of the surface of the disc on which friction elements of an outermost row and of an innermost row act.

It has been experimentally demonstrated that the above-described solution, despite being effective towards the problem of the grooves created on the disc, entails a loss in terms of static friction between the pad and the disc.

Furthermore, the friction elements can be coupled on the base plate in elastic condition or in rigid condition. The difference between these two coupling conditions depends on whether or not an elastic element, for example a Belleville washer, is interposed between the friction element and the base plate. It has been experimentally noted that should the friction elements be coupled in elastic condition, the static friction between pad and disc is worsened.

The need was thus felt to have a type of disc brakes, whose technical characteristics are such to guarantee the required levels of static friction even if the pads are constituted by a plurality of friction elements.

The inventors of the present invention have provided a solution relative to a pad for disc brakes capable of satisfying the above-mentioned need, by intervening on a differentiated elasticity of the elastic elements depending on their different compressibility.

Document EP4006373 A1 discloses a disc brake for railway vehicles with friction elements, wherein said friction elements comprise first friction elements made of a first material and second friction elements made of a second material.

### OBJECT OF THE INVENTION

The object of the present invention is a disc brake for railway vehicles comprising a pad and a disc on which the pad acts; said pad comprising a base plate and a plurality of friction elements fixed to the base plate; said friction elements comprising first friction elements made with a first friction material and second friction elements made with a second friction material; said first friction material having a compressibility modulus (pressure necessary to compress the material by 1mm) greater than that of said second friction material by a value greater than or equal to 1 MPa, preferably 2 MPa; said first friction elements being in a higher number than said second friction elements; said pad for disc brakes for railway vehicles being characterized by the fact that an elastic element is interposed between each of said first friction elements and said base plate, and by the fact that a respective rigid spacer is interposed between each of at least part of said second friction elements and said base plate.

Here and in the following, elastic element means an element that has the deformation of 1 mm by applying a value less than or equal to 1 MPa, whereas rigid spacer means a spacer made with a material with deformation of 1mm by applying a force greater than or equal to 2 MPa.

Preferably, a respective rigid spacer is interposed between each of said second friction elements and said base plate.

Preferably, said friction elements are arranged in rows of arcuate shape and in use substantially superimposed on respective concentric lines of the disc on which the pad acts; each row of arcuate shape comprising both said first friction elements and said second friction elements.

Preferably, in each of the arched rows, said first friction elements are equal to or greater in number than said second friction elements.

Preferably, said first material has a compressibility modulus of between 2 and 40 MPa, and said second material has a compressibility modulus of between 1 and 20 MPa.

Preferably, said first friction material is a sintered material and said second friction material is an organic material.

Preferably, the sintered material has a composition composed of: from 10 to 70% by weight of copper, from 5 to 50% by weight of iron, from 5 to 30% by weight of graphite, from 1 to 15% by weight of friction modifiers.

Preferably, the organic material has a composition composed of: from 5 to 30% by weight of rubber and resin, from 10 to 50% by weight of filler, from 5 to 20% by weight of graphite, from 5 to 20% by weight of friction modifiers.

Preferably, the disc brake object of the present invention is applied to low/medium speed trains.

### BRIEF DESCRIPTION OF THE DRAWINGS

In order to better understand the invention, an embodiment is described in the following by way of mere nonlimiting example with the aid of the figures of the accompanying drawing, wherein:
Figure 1 is a top view, with parts in transparency for clarity, of a pad object of the present invention;
Figure 2 is a section along line II - II of Figure 1;
Figure 3 is a section along line III - III of Figure 1;
Figure 4 is a graph in which the friction coefficient values of a disc brake of comparison are registered;
Figure 5 is a graph in which the friction coefficient values of the brake of the disc of Figure 1 are registered.

### PREFERRED EMBODIMENT OF THE INVENTION

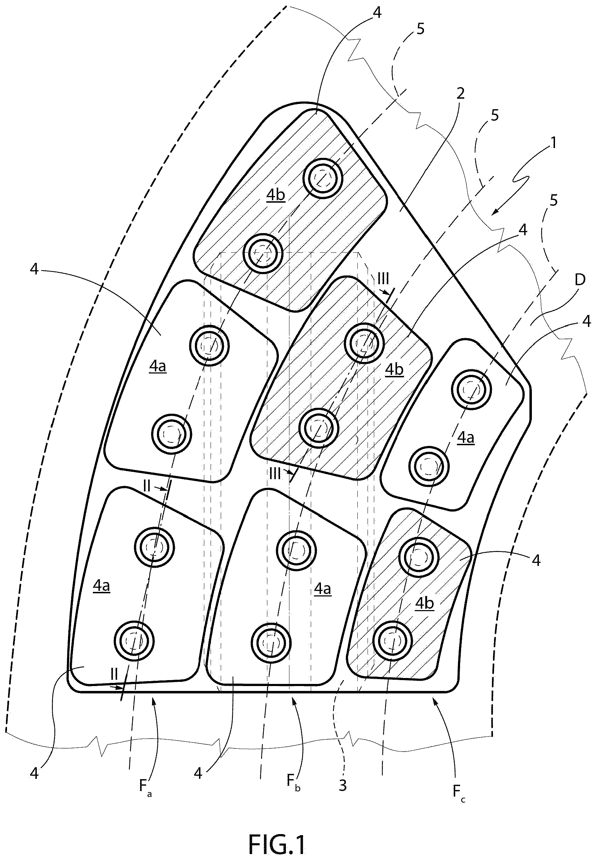

In Figure 1, reference numeral 1 indicates, as a whole, a pad for disc brakes according to the present invention.

The pad 1 comprises a base plate 2, a "dovetail" fixing element 3, which is fixed on a rear surface of the base plate 2 and designed for fixing the pad 1 to a structure of the disc brake, and a plurality of friction elements 4 fixed to the base plate 2 and arranged for exerting the pressure on the disc of the brake for producing the braking action.

For the purposes of the present invention, it is irrelevant if the friction elements 4 can be fixed to the plate 2 in a reversible manner or in an irreversible manner.

The friction elements 4 are arranged along arched rows illustrated by a dashed line and indicated by 5, which in use are substantially superimposed on concentric lines of a disc D on which the pad 1 acts. For simplicity, the disc D is illustrated by a dashed line and only partially.

The friction elements 4 are divided into four friction elements 4a made of sintered friction material and three friction elements 4b made of organic friction material. For clarity, the friction elements made of organic material 4b are represented by a dashed surface.

The organic material of the friction elements 4b has a composition which satisfies the following conditions: from 5 to 30% by weight of rubber and resin, from 10 to 50% by weight of filler, from 5 to 20% by weight of graphite, from 5 to 20% by weight of friction modifiers.

The organic material has a compressibility modulus of 7 MPa.

The sintered material of the friction elements 4a has a composition which satisfies the following conditions: from 10 to 70 % by weight of copper, from 5 to 40 % by weight of iron, from 5 to 20 % by weight of graphite, from 1 to 10 % by weight of friction modifiers.

The sintered material has a compressibility modulus of 27 MPa.

Unlike what described above, the first material and the second material can both be sintered materials or both organic materials, as long as the conditions of compressibility modulus mentioned in the claims are respected.

The materials of different compressibility can be obtained, besides by materials with different chemical nature, also by means of a different preparation process of a same chemical type of material.

For example, by intervening on the porosity of the resulting material, it will be possible to modify the compressibility.

In particular, the friction elements 4 are arranged on three rows identifiable as an outer row Fa, an intermediate row Fb and an inner row Fc.

The outer row Fa comprises three friction elements 4 having equal dimensions, whereas the intermediate row Fb comprises two friction elements 4 having equal dimensions and each of which has a friction surface equal to that of each of the elements of the outer row Fa.

Differently, the inner row Fc comprises two friction elements 4 equal to each other and each of which has a friction surface less than that of each of the elements of the outer row Fa or of the intermediate row Fb.

The friction elements 4 of each row exert their action on a portion of disc D which is superimposed on the portions of disc D on which the friction elements 4 of the subsequently outermost and innermost rows act.

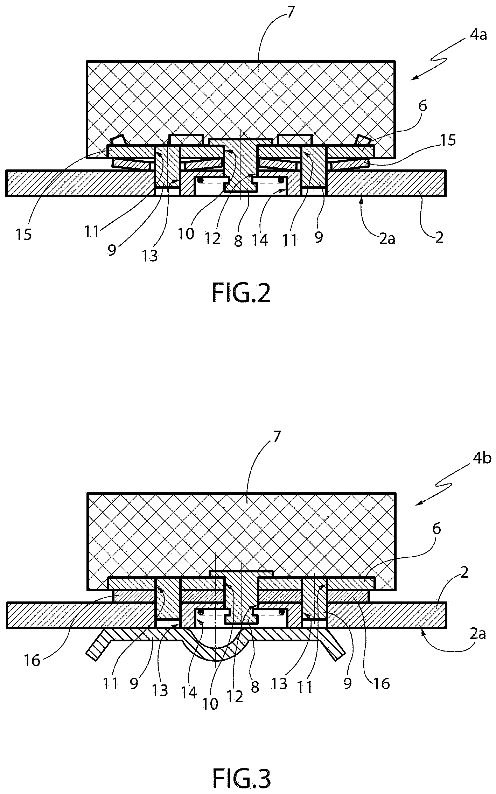

As is illustrated in Figures 2 and 3, each of the friction elements 4 is composed of a sheet 6 having a flat shape, of an insert 7 made of friction material and fixed in an irreversible manner to the sheet 6, of a fixing pin 8 and of two anti-rotation plugs 9.

In particular, in the sheet 6 a central hole 10 is obtained engaged by the fixing pin 8 and two side holes 11, each of which is engaged by a respective anti-rotation plug 9.

Once the friction element 4 is assembled, the heads of the fixing pin 8 and of the anti-rotation plugs 9 are embedded in the friction material of the insert 7.

For each of the friction elements 4, on the base plate 2 a central hole 12 and two side holes 13 are obtained. The central hole 12 has a diameter greater than the side holes 13 and is obtained in the center of a respective circular recess 14 obtained, in turn, on a lower surface 2a of the base plate 2. The circular recess 14 houses a locking spring 12 which engages a circumferential groove obtained in the fixing pin 8.

Figures 2 and 3 illustrate two different coupling conditions. In particular, the coupling condition illustrated in Figure 2 provides for the presence of two Belleville washers 15 and, according to the invention, it is applied to the friction elements which provide for the sintered friction material, i.e. the material which has a greater compressibility modulus.

Each of the two Belleville washers 15 is arranged between the sheet 6 and the base plate 2, and has a hole engaged by a respective anti-rotation plug 9.

Differently, the coupling condition illustrated in Figure 3 provides for the presence of two rigid spacers 16 and, according to the invention, it is applied to the friction elements which provide for the organic friction material, i.e. the material which has a lesser compressibility modulus.

Each of the two rigid spacers 16 is arranged between the sheet 6 and the base plate 2, and has a hole engaged by a respective anti-rotation plug 9. In particular, the two rigid spacers 16 are made of any material capable of standing the specific pressures and the heat generated during the braking, such as metals or plastic materials, in one single piece or composed of the sum of lesser thicknesses.

Essentially, according to the invention, in the pad the friction elements made with a low-compressibility friction material are coupled to the base plate in an elastic condition, whereas at least part of the friction elements made with a high-compressibility friction material are coupled to the base plate in a rigid condition.

The inventors of the present invention carried out experimental tests, in order to verify the advantages in terms of static friction coefficient given by the present invention.

Such experimental tests were carried out by means of a dynamometric test bench in compliance with the UIC 541-3 standard.

For the sake of clarity, the dynamometric test bench used is a BIO - PW4 Type model produced by the company SCHENCK PEGASUS GmbH, Darmstadt.

The tests were carried out using a brake of comparison and a brake according to the present invention.

The brake of comparison is distinguished from the brake of the present invention exclusively due to the fact that in the relative pad all the friction elements 4a and 4b are coupled to the plate with the presence of the Belleville washers. Differently, the brake according to the present invention, as is illustrated in Figures 1 - 3, provides in the relative pad for the friction elements 4a (sintered friction material - lesser compressibility) to be coupled to the base plate by means of the interposition of the Belleville washers (elastic coupling condition), whereas the friction elements 4b (organic friction material - greater compressibility) to be coupled to the base plate by means of the interposition of the rigid spacers (rigid coupling condition).

In other words, in the pad of the brake of comparison all the friction elements, regardless of the compressibility of their friction material, are coupled to the base plate by means of the interposition of the Belleville washers; differently, in the pad of the brake according to the invention, only the friction elements with friction material having lesser compressibility are coupled to the base plate by means of the interposition of the Belleville washers, whereas the friction elements with friction material having greater compressibility are coupled to the base plate by means of the interposition of the rigid spacers.

The disc brake of comparison and the disc brake according to the invention were subjected to the experimental tests according to the above-mentioned conditions and following a procedure for verifying the static friction not referred to a particular project.

In particular, the experimental procedure used provides, once the pads are compressed on the disc with a force between 10 and 50kN, for the dynamometric test bench to start increasing the torsional moment on the disc until the same starts rotating and, therefore, the pads start sliding with respect to the disc. The torsional moment on the disc continues increasing until reaching the speed of 0.8 km/h of the disc. Such speed is maintained for a period of 5 seconds.

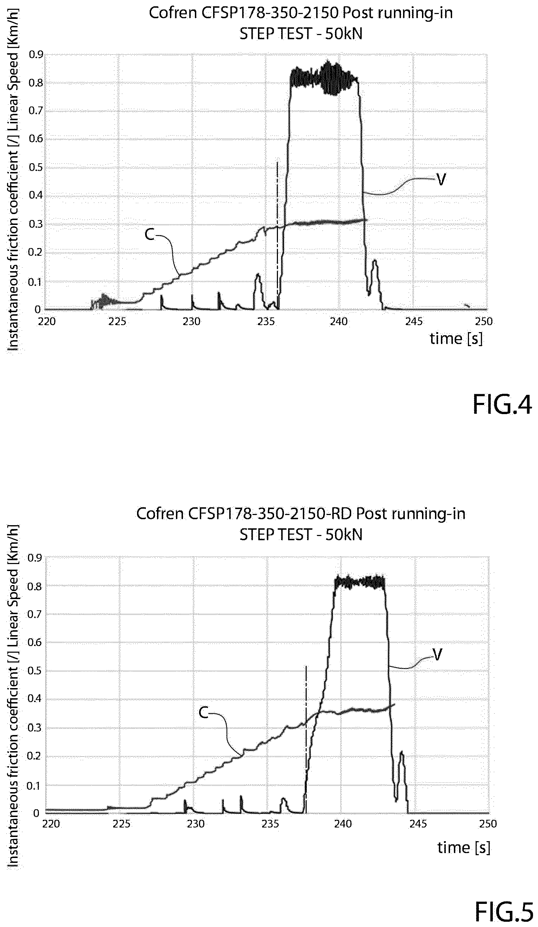

The graphs of Figures 4 and 5 show the friction coefficients registered depending on the speeds of the disc and of the application time of the torsional moment for the force of 50 kN, which is the most representative in the railways field of the latest generation vehicles.

For convenience, the ordinate shows on one single scale both the friction coefficient values and the speed values of the disc.

In the graphs of Figures 4 and 5 the curve relative to the friction coefficient is indicated by C, whereas the curve relative to the speed of the disc is indicated by V.

As it can be obvious for a person skilled in the art, the static friction coefficient is detected on the graphs at the beginning of the rotation of the disc. In graphs 4 and 5 a dash-dot line was inserted for identifying the static friction values detected as described above.

As it is possible to verify from the graphs of Figure 4 and of Figure 5, with the brake according to the invention a sensibly greater static friction coefficient is registered than that registered with the brake of comparison.

In fact, in the graph of Figure 4 a static friction coefficient value less than 0.3 is registered; whereas in the graph of Figure 5 a static friction coefficient value greater than 0.30 is registered, in the order of 0.35.

Such a difference is exclusively due to the different coupling conditions of the friction elements, this being the sole condition that changes between the brake of comparison and that of the invention.

Based on the above description, it is evident that the present invention allows guaranteeing the required levels of static friction coefficient for a pad having a plurality of friction elements, while maintaining all the advantages deriving from the presence of the plurality of friction elements.

The core of the invention lies in the different elasticity conferred to the friction elements depending on their compressibility.

## Claims

1. Disc brake for railway vehicles comprising a pad (1) and a disc (D) on which the pad (1) acts; said pad (1) comprising a base plate (2) and a plurality of friction elements (4) fixed to the base plate (2); said friction elements (4) comprising first friction elements (4a) made with a first friction material and second friction elements (4b) made with a second friction material; said first friction material having a compressibility modulus (pressure necessary to compress the material by 1mm) greater than that of said second friction material by a value greater than or equal to 1 Mpa; said first friction elements (4a) being in a higher number than said second friction elements (4b); said pad (1) for disc brakes for railway vehicles being **characterized by** the fact that a respective elastic element (15) is interposed between each of said first friction elements (4a) and said base plate (2), and by the fact that a respective rigid spacer (16) is interposed between each of at least part of said second friction elements (4b) and said base plate (2).

2. Disc brake for railway vehicles according to claim 1, **characterized in that** said first friction material has a compressibility modulus (pressure necessary to compress the material by 1mm) greater than that of said second friction material by a value greater than or equal to 2 Mpa.

3. Disc brake for railway vehicles according to claim 1 or 2, **characterized in that** a respective rigid spacer (16) is interposed between each of said second friction elements (4b) and said base plate (2).

4. Disc brake for railway vehicles according to one of the preceding claims, **characterized in that** said elastic element is constituted by a Belleville washer (15).

5. Disc brake for railway vehicles according to one of the preceding claims, **characterized in that** said friction elements (4) are arranged in rows of arcuate shape (5) and in use substantially superimposed on respective concentric lines of the disc (D) on which the pad acts; each row of arcuate shape (5) comprising both said first friction elements (4a) and said second friction elements (4b).

6. Disc brake for railway vehicles according to claim 5, **characterized in that** in each of the arched rows (5) said first friction elements (4a) are equal to or greater in number than said second friction elements (4b).

7. Disc brake for railway vehicles according to one of the preceding claims, **characterized in that** said first material has a compressibility modulus of between 20 and 40 MPa, and said second material has a compressibility modulus of between 1 and 20 MPa.

8. Disc brake for railway vehicles according to one of the preceding claims, **characterized in that** said first friction material is a sintered material and said second friction material is an organic material.

9. Disc brake for railway vehicles according to one of the preceding claims, **characterized in that** it is intended for low/medium speed trains.

## Patentansprüche

1. Scheibenbremse für Schienenfahrzeuge, umfassend einen Bremsklotz (1) und eine Scheibe (D), auf die der Bremsklotz (1) wirkt; wobei der Bremsklotz (1) eine Grundplatte (2) und eine Mehrzahl von Reibelementen (4) umfasst, die an der Grundplatte (2) fixiert sind; wobei die Reibelemente (4) erste Reibelemente (4a), die aus einem ersten Reibmaterial hergestellt sind, und zweite Reibelemente (4b), die aus einem zweiten Reibmaterial hergestellt sind, umfassen; wobei das erste Reibmaterial einen Kompressionsmodul (Druck, der notwendig ist, um das Material um 1 mm zu komprimieren) aufweist, der um einen Wert größer oder gleich 1 MPa größer als der des zweiten Reibmaterials ist; wobei die ersten Reibelemente (4a) in einer höheren Anzahl als die zweiten Reibelemente (4b) vorhanden sind; wobei der Bremsklotz (1) für Scheibenbremsen für Schienenfahrzeuge **dadurch gekennzeichnet ist, dass** ein jeweiliges elastisches Element (15) zwischen jedem der ersten Reibelemente (4a) und der Grundplatte (2) angeordnet ist, und dadurch, dass ein jeweiliger fester Abstandshalter (16) zwischen jedem von zumindest einem Teil der zweiten Reibelemente (4b) und der Grundplatte (2) angeordnet ist.

2. Scheibenbremse für Schienenfahrzeuge nach Anspruch 1, **dadurch gekennzeichnet, dass** das erste Reibmaterial einen Kompressionsmodul (Druck, der notwendig ist, um das Material um 1 mm zu komprimieren) aufweist, der um einen Wert größer oder gleich 2 MPa größer als der des zweiten Reibmaterials ist.

3. Scheibenbremse für Schienenfahrzeuge nach Anspruch 1 oder 2, **dadurch gekennzeichnet, dass** ein jeweiliger starrer Abstandshalter (16) zwischen jedem der zweiten Reibelemente (4b) und der Grundplatte (2) angeordnet ist.

4. Scheibenbremse für Schienenfahrzeuge nach einem der vorangehenden Ansprüche, **dadurch gekennzeichnet, dass** das elastische Element aus einer Tellerfeder (15) besteht.

5. Scheibenbremse für Schienenfahrzeuge nach einem der vorangehenden Ansprüche, **dadurch gekennzeichnet, dass** die Reibelemente (4) in Reihen von bogenförmiger Form (5) angeordnet sind und im Gebrauch im Wesentlichen auf jeweiligen konzentrischen Linien der Scheibe (D), auf die der Bremsklotz wirkt, überlagert sind; wobei jede Reihe von bogenförmiger Form (5) sowohl die ersten Reibelemente (4a) als auch die zweiten Reibelemente (4b) umfasst.

6. Scheibenbremse für Schienenfahrzeuge nach Anspruch 5, **dadurch gekennzeichnet, dass** in jeder der bogenförmigen Reihen (5) die Anzahl der ersten Reibelemente (4a) gleich oder größer als die der zweiten Reibelemente (4b) ist.

7. Scheibenbremse für Schienenfahrzeuge nach einem der vorangehenden Ansprüche, **dadurch gekennzeichnet, dass** das erste Material einen Kompressionsmodul zwischen 20 und 40 MPa aufweist und das zweite Material einen Kompressionsmodul zwischen 1 und 20 MPa aufweist.

8. Scheibenbremse für Schienenfahrzeuge nach einem der vorangehenden Ansprüche, **dadurch gekennzeichnet, dass** das erste Reibmaterial ein gesintertes Material ist und das zweite Reibmaterial ein organisches Material ist.

9. Scheibenbremse für Schienenfahrzeuge nach einem der vorangehenden Ansprüche, **dadurch gekennzeichnet, dass** sie für Niedriggeschwindigkeitszüge/Mittelgeschwindigkeitszüge vorgesehen ist.

## Revendications

1. Frein à disque pour véhicule ferroviaire comprenant une plaquette (1) et un disque (D) sur lequel agit la plaquette (1), ladite plaquette (1) comprenant une plaque de base (2) et une pluralité d'éléments de friction (4) fixés à la plaque de base (2) ; lesdits éléments de friction (4) comprenant des premiers éléments de friction (4a) réalisés avec un premier matériau de friction et des seconds éléments de friction (4b) réalisés avec un second matériau de friction ; ledit premier matériau de friction ayant un module de compressibilité (pression nécessaire pour comprimer le matériau de 1 mm) supérieur à celui dudit second matériau de friction d'une valeur supérieure ou égale à 1 Mpa ; lesdits premiers éléments de friction (4a) étant en nombre supérieur auxdits seconds éléments de friction (4b) ; ladite plaquette (1) pour freins à disque pour véhicules ferroviaires étant **caractérisée par le fait qu'**un élément élastique respectif (15) est interposé entre chacun desdits premiers éléments de friction (4a) et ladite plaque de base (2), et **par le fait qu'**une entretoise rigide respective (16) est interposée entre chacun d'au moins une partie desdits seconds éléments de friction (4b) et ladite plaque de base (2).

2. Frein à disque pour véhicules ferroviaires selon la revendication 1, **caractérisé en ce que** ledit premier matériau de friction présente un module de compressibilité (pression nécessaire pour comprimer le matériau de 1 mm) supérieur à celui dudit second matériau de friction d'une valeur supérieure ou égale à 2 Mpa.

3. Frein à disque pour véhicules ferroviaires selon la revendication 1 ou 2, **caractérisé en ce qu'**une entretoise rigide respective (16) est interposée entre chacun desdits seconds éléments de friction (4b) et ladite plaque de base (2).

4. Frein à disque pour véhicules ferroviaires selon l'une des revendications précédentes, **caractérisé en ce que** ledit élément élastique est constitué par une rondelle Belleville (15).

5. Frein à disque pour véhicules ferroviaires selon l'une des revendications précédentes, **caractérisé en ce que** lesdits éléments de friction (4) sont disposés en rangées de forme arquée (5) et en utilisation sensiblement superposés sur des lignes concentriques respectives du disque (D) sur lequel agit la plaquette ; chaque rangée de forme arquée (5) comprenant à la fois lesdits premiers éléments de friction (4a) et lesdits seconds éléments de friction (4b).

6. Frein à disque pour véhicules ferroviaires selon la revendication 5, **caractérisé en ce que** dans chacune des rangées arquées (5) lesdits premiers éléments de friction (4a) sont en nombre égal ou supérieur auxdits seconds éléments de friction (4b).

7. Frein à disque pour véhicules ferroviaires selon l'une des revendications précédentes, **caractérisé en ce que** ledit premier matériau présente un module de compressibilité compris entre 20 et 40 MPa, et ledit second matériau présente un module de compressibilité compris entre 1 et 20 MPa.

8. Frein à disque pour véhicules ferroviaires selon l'une des revendications précédentes, **caractérisé en ce que** ledit premier matériau de friction est un matériau fritté et ledit deuxième matériau de friction est un matériau organique.

9. Frein à disque pour véhicules ferroviaires selon l'une des revendications précédentes, **caractérisé en ce qu'**il est destiné aux trains à basse/moyenne vitesse.
